Europäisches Patentamt

(19) European Patent Office

Office européen des brevets

(11) Publication number: **0 031 248**
**B1**

## EUROPEAN PATENT SPECIFICATION

(45) Date of publication of patent specification: **14.09.83**

(21) Application number: **80304597.0**

(22) Date of filing: **18.12.80**

(51) Int. Cl.³: **A 01 B 39/22, A 01 B 35/22**

(54) Earth engaging agricultural implement and method of making same.

(30) Priority: **20.12.79 AU 1794/79**

(43) Date of publication of application:
**01.07.81 Bulletin 81/26**

(45) Publication of the grant of the patent:
**14.09.83 Bulletin 83/37**

(84) Designated Contracting States:
**AT BE CH DE FR GB IT LI LU NL SE**

(56) References cited:
**DE - C - 464 987**
**GB - A - 1 499 968**
**US - A - 1 499 531**
**US - A - 2 094 424**

(73) Proprietor: **RALPH McKAY LIMITED**
**35-46, Hampstead Road**
**Maidstone 3012 Victoria (AU)**

(72) Inventor: **Johnson, William Meredith**
**49 Wickham Street**
**Melton South Victoria (AU)**

(74) Representative: **Jennings, Nigel Robin et al,**
**KILBURN & STRODE 30 John Street**
**London WC1N 2DD (GB)**

Courier Press, Leamington Spa, England

### Earth engaging agricultural implement and method of making same

This invention relates to agricultural earth engaging implements of the kind which are adapted to be fitted to the tines of agricultural machines and drawn through the earth and is concerned with that type of implement which comprises an earth engaging portion and a shaft portion which is inclined rearwardly and upwardly from the earth engaging portion and which is not integral with the earth engaging portion but is connected to the rear of the earth engaging portion, the ratio of the width of the shaft portion transverse to the intended direction of travel of the implement to that of the earth engaging portion being not less than 1:5.

Conventional shares and sweeps used as earth engaging implements are constructed in one piece and adapted to be bolted to the tines. This means that considerable labour is involved in removing worn shares or sweeps and replacing them. Further the attachment shafts and the tines are conventionally of wide profile, (partly due to the presence of bolts extending through them) and these wide shafts and tines accumulate a projection of earth when being forced through the soil during cultivation. This forward agglomeration of soil inhibits the implement's forward progress and for a large agricultural machine carrying numerous such implements the extra energy, and horsepower of the towing vehicle, required is significant.

A problem encountered in the manufacture of shares and sweeps is that there is a significant wastage of metal due to the presence of the shaft which projects beyond the main portion of the shares or sweeps. This means that in forming the shares or sweeps in one piece from metal plate a relatively large portion of the metal plate is wasted because the blanked implement shapes do not lend themselves to nesting arrangements due to the presence of the large projecting shafts.

German Patent No. 464987 discloses an agricultural implement of the generic type referred to above which is secured to the tine of an agricultural machine by bending the metal of its vertically extending hollow shaft portion around the tine. Removing the implement from the tine or exchanging it for a new one is a relatively complex and time-consuming operation because the shaft portion must be bent away from the tine which requires the application of considerable force.

U.S. Patent No. 1499531 discloses an agricultural implement in which a hollow shaft portion is integral with the engaging portion and extends upwardly and rearwardly therefrom and is of substantially triangular section defining a rearwardly directed slot. The formation of this implement from a metal blank is somewhat complex and its attachment to an agricultural machine is by way of bolts which pass through the stock of the machine and the slot in the shaft portion and whose heads are retained within the hollow shaft portion and thus removal of the implement from the machine is also relatively time-consuming.

It is an object of the present invention to provide an earth engaging implement of a design which substantially overcomes the above problems and in particular which can be made from two metal blanks with little or no wastage and which can be simply connected to or removed from an agricultural implement.

According to the present invention the implement is characterised in that the shaft portion defines a downwardly tapered, upwardly and rearwardly extending recess adapted to receive and retain a complementary shaped tine or an agricultural machine without bolts or other fasteners.

The narrow width of the shaft is selected by forming the shaft from metal plate which is bent about itself to form in cross section a preferably substantially triangular recess the height of which is large relative to the base and the recess being tapered such that the height of the triangular cross section decreases toward the lower end of the shaft. Ideally the lower end of the shaft is secured to the earth engaging portion of the implement such that the apex of the triangular cross section is aligned with the intended direction of travel of the implement. Because the shaft is substantially triangular or wedge shaped no soil can accumulate forwardly of the shaft when the implement is in use. By comparison with known shares and sweeps for large agricultural machines towing tractors of significantly lower horse power can be used to propel the array of shares or sweeps through the soil.

A further advantage of this invention is that no bolts are required to secure the implement to the tine. Because of the downward taper of the shaft recess and the complementary taper of the tine foot the reactive force on the implement during soil working forces the sweep or share more tightly onto the tine.

A significant advantage of the present invention is the saving of material in the manufacture of the implements. The shares and sweeps can be made from substantially triangular blanks which can easily be cut from sheet metal stock with little wastage. The shafts can similarly be made from substantially rectangular blanks formed from sheet stock again with little or no material wastage. Further as the earth engaging portions are most subject to soil wear the shafts can be formed from thinner gauge sheet metal, thereby obtaining significant material cost savings. Thus in a further advantageous form of the invention the implement is characterised in that the shaft portion is made of metal plate of thinner gauge than that of which the earth engaging portion is made.

Preferably the shaft is formed with flanges on its lower end which flanges can be secured, e.g. welded or riveted to complementary flanges on the rear of the earth engaging portion of the implement.

The invention also extends to a method of making an earth engaging implement in accordance with the invention. In accordance with a further aspect of the present invention such a method is characterised by blanking an earth engaging portion and a shaft portion from metal plate and forming them into three dimensional form and connecting the shaft portion to the rear of the earth engaging portion.

Two embodiments of this invention will now be described by way of example with reference to the accompanying drawings in which:—

Figures 1(a) to (e) are a plan view, front view, side view, rear view and underneath view respectively of a share or cultivating point; and

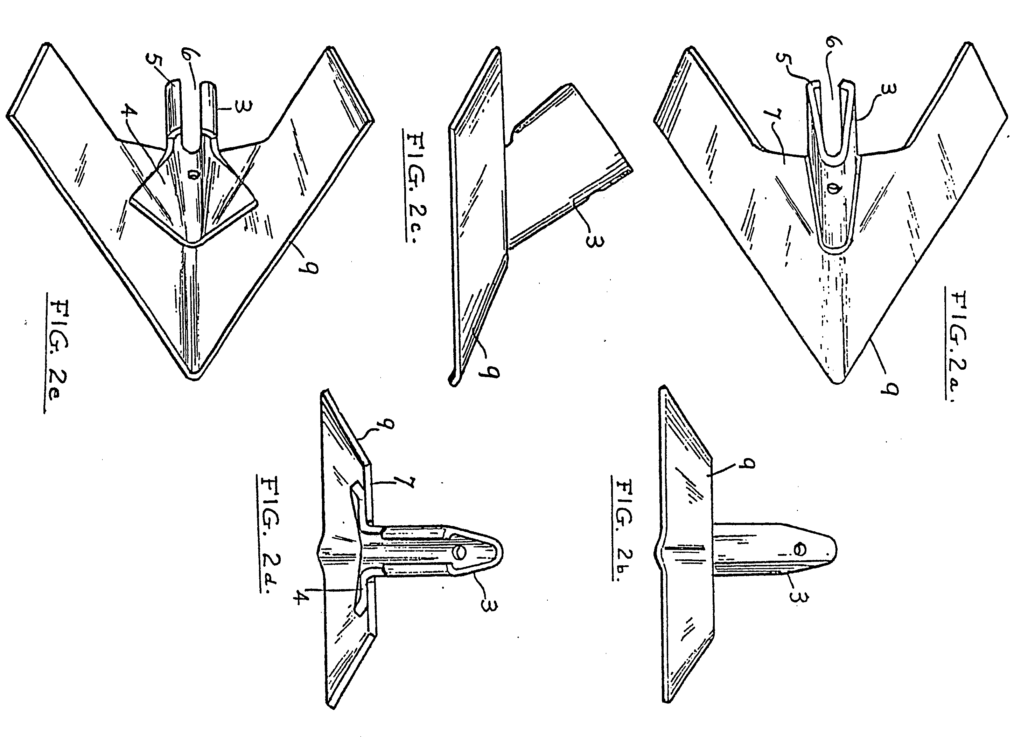

Figures 2(a) to (e) are corresponding views of a sweep.

In each case the implement comprises a shaft 3 secured to a blade 8 or 9. The shaft 3 includes base flanges 4 and vertical flanges 5 and incorporates a tapered recess 6 into which the foot of a tine is designed to seat. In order to present a narrow profile in the forward direction the shaft 3 is also tapered in cross section toward the apex of share blade 8 or sweep blade 9.

The blade 8 or 9 includes an inclined portion and substantially horizontal flanges 7 and the base flange 4 of the shaft 3 underlies the flanges 7 of the share blade 8 or sweep blade 9 and the shaft is welded to the share or sweep blade at these points.

As mentioned above the shaft can be formed from a rectangular blank by conventional metal forming techniques. Similarly the share blade 8 and the sweep blade 9 can also be formed by conventional techniques from triangular blanks with a minimal wastage of material.

Because of the downward taper of the shaft no securing bolts are required to retain the sweep or share on the tine. Also because of the narrow profile of the shaft less force is required, to move the implements through the soil, than with conventional shafts which are wider in profile.

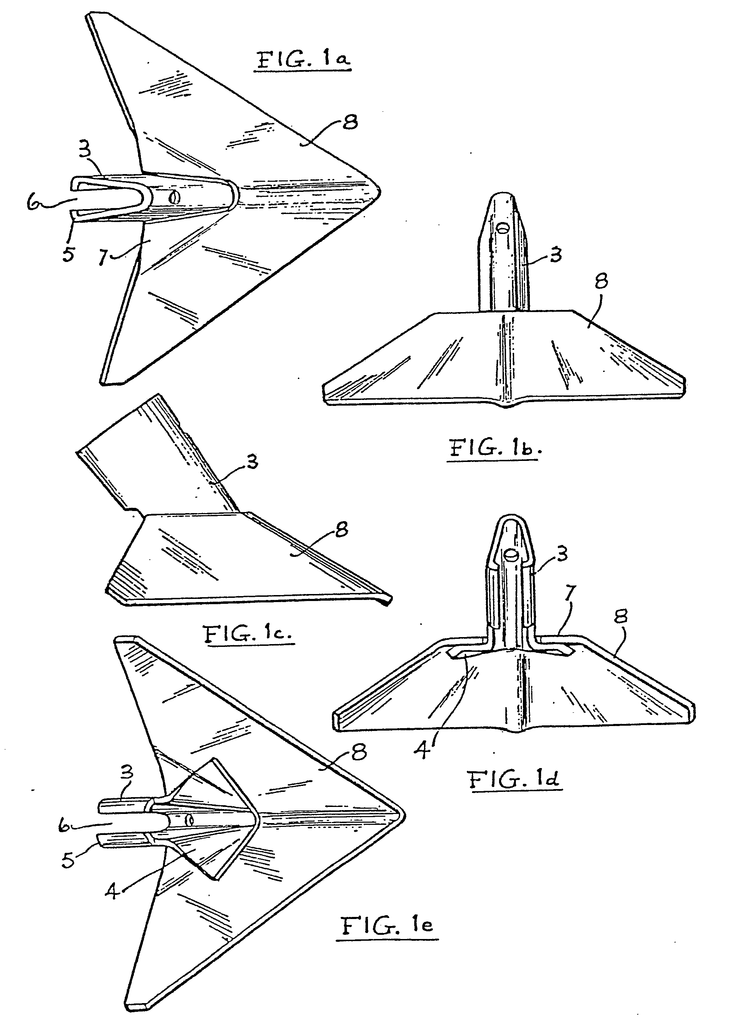

Another significant advantage which arises out of the provision of a two piece implement is that the angle of shaft relative to the blade can be closer to perpendicular than in one piece implements. This is significant where a "stump jump" release mechanism is used. When the implement strikes an obstacle the tine swings backwards and as the obstacle is cleared the tine returns to its earth engaging position. If the implement is not bolted and if the implement does not strike the soil on the return of the tine, there is a possibility in prior art implements that the implement would be flung off the tine. In the present invention however when the tine recoils and the implement reaches the end of the swing as in Figure 1(c) the momentum of the implement is horizontal whereas the frictional force holding the share to the tine is predominantly of vertical orientation in contrast to the known constructions. Thus the present invention ensures more satisfactorily that accidental loss of non-bolted tines cannot occur.

Thus in summary it can be seen that the present invention provides earth engaging implements which are easy to assemble onto tines, are less expensive to manufacture and are energy saving.

## Claims

1. An agricultural earth engaging implement comprising an earth engaging portion (8, 9) and a shaft portion (3) which is inclined rearwardly and upwardly from the earth engaging portion (8, 9) and which is not integral with the earth engaging portion (8, 9) but is connected to the rear of the earth engaging portion (8, 9), the ratio of the width of the shaft portion (3) transverse to the intended direction of travel of the implement to that of the earth engaging portion being not less than 1:5, characterised in that the shaft portion (3) defines a downwardly tapered, upwardly and rearwardly extending recess (6) adapted to receive and retain a complementary shaped tine of an agricultural machine without bolts or other fasteners.

2. An implement as claimed in Claim 1 characterised in that the earth engaging portion (8, 9) and the shaft portion (3) are formed from substantially triangular and substantially rectangular blanks respectively cut from sheet metal stock.

3. An implement as claimed in Claim 1 or 2 characterised in that the shaft portion (3) is of substantially triangular cross section with the apex of the triangle substantially aligned with the implement's intended direction of travel.

4. An implement as claimed in any one of the preceding claims characterised in that the shaft portion (3) is made of metal plate of thinner gauge than that of which the earth engaging portion (8, 9) is made.

5. A method of forming an agricultural earth engaging implement as claimed in any one of Claims 1 to 4 characterised by the steps of blanking the earth engaging portion (8, 9) and a shaft portion (3) from metal plate and forming them into three dimensional form and connecting the shaft portion (3) to the rear of the earth engaging portion (8, 9).

6. A method as claimed in Claim 5 characterised in that a substantially triangular blank is used for the earth engaging portion (8, 9) and a substantially rectangular blank of thinner gauge material is used for the shaft portion (3).

## Revendications

1. Outil agricole pour le travail du sol comprenant une partie travaillant le sol (8, 9) et une douille (3) qui est inclinée vers l'arrière et vers le haut à partir de la partie travaillant le sol (8, 9) et qui n'est pas d'une pièce avec cette partie travaillant le sol (8, 9), mais est reliée à l'arrière de celle-ci, le rapport de la largeur de la douille (3) transversalement à la direction d'avancement prévue de l'outil et de la largeur de la partie travaillant le sol n'étant pas inférieur à 1:5, caractérisé en ce que la douille (3) délimite un logement (6) qui s'étend vers le haut et vers l'arrière, qui va en se resserrant vers le bas et qui est à même de recevoir et de retenir une dent de forme complémentaire d'une machine agricole sans l'aide de boulons ou d'autres organes d'assemblage.

2. Outil suivant la revendication 1, caractérisé en ce que la partie travaillant le sol (8, 9) et la douille (3) sont fabriquées au départ de flans en substance triangulaire et en substance rectangulaire découpés, respectivement, dans de la tôle.

3. Outil suivant la revendication 1 ou 2, caractérisé en ce que la douille (3) présente une section transversale en substance triangulaire, le sommet du triangle étant en substance en ligne avec la direction d'avancement prévue de l'outil.

4. Outil suivant l'une quelconque des revendications précédentes, caractérisé en ce que la douille (3) est faite d'une tôle plus mince que celle de la partie travaillant le sol (8, 9).

5. Procédé pour fabriquer un outil agricole pour le travail du sol, suivant l'une quelconque des revendications 1 à 4, caractérisé en ce qu'on découpe un flan pour la partie travaillant le sol (8, 9) et un flan pour la douille (3) dans une tôle et on les façonne à trois dimensions, puis on relie la douille (3) à l'arrière de la partie travaillant le sol (8, 9).

6. Procédé suivant la revendication 5 caractérisé en ce qu'on utilise un flan en substance triangulaire pour la partie travaillant le sol (8, 9) et un flan en substance rectangulaire en tôle plus mince pour la douille (3).

## Patentansprüche

1. Landwirtschaftliches Bodenbearbeitungswerkzeug mit einem Bodenbearbeitungsteil (8, 9) und einem Schaftteil (3), welcher von dem Bodenbearbeitungsteil (8, 9) rückwärts und aufwärts geneigt verläuft und welcher mit dem Bodenbearbeitungsteil (8, 9) nicht einstückig ist, jedoch an dem hinteren Bereich des Bodenbearbeitungsteils (8, 9) befestigt ist, wobei das Verhältnis der Breite des Schaftteils (3), quer zur beabsichtigten Vorschubrichtung des Werkzeuges gemessen, zu jener des Bodenbearbeitungsteils nicht weniger als 1:5 beträgt, dadurch gekennzeichnet, daß der Schaftteil (3) eine sich nach unten verjüngende, nach oben und rückwärts erstreckende Aussparung (6) begrenzt, welche zum Aufnehmen und zum ohne Bolzen oder andere Befestigungsmittel erfolgenden Halten einer komplementär geformten Zinke einer landwirtschaftlichen Maschine geeignet ist.

2. Werkzeug nach Anspruch 1, dadurch gekennzeichnet, daß der Bodenbearbeitungsteil (8, 9) bzw. der Schaftteil (3) aus im wesentlichen dreieckigen bzw. im wesentlichen rechteckigen Blechausschnitten geformt bzw. aus Blechmaterial geschnitten sind.

3. Werkzeug nach Anspruch 1 oder 2, dadurch gekennzeichnet, daß der Schaftteil (3) im wesentlichen dreieckigen Querschnitt aufweist, wobei der Scheitelpunkt des Dreiecks im wesentlichen in die geplante Vorschubrichtung des Werkzeuges gerichtet ist.

4. Werkzeug nach einem der vorhergehenden Ansprüche, dadurch gekennzeichnet, daß der Schaftteil (3) aus einer Materialplatte gefertigt ist, die eine geringere Stärke aufweist als jene, aus welcher der Bodenbearbeitungsteil (8, 9) gefertigt ist.

5. Verfahren zur Herstellung eines Bodenbearbeitungswerkzeuges nach einem der Ansprüche 1 bis 4, gekennzeichnet durch die Schritte des Ausstanzens des Bodenbearbeitungsteiles (8, 9) sowie des Schaftteiles (3) aus Metallblech, des Formens der Teile in dreidimensionale Gebilde und des Befestigens des Schaftteiles (3) an dem hinteren Bereich des Bodenbearbeitungsteiles (8, 9).

6. Verfahren nach Anspruch 5, dadurch gekennzeichnet, daß ein im wesentlichen dreieckiger Blechausschnitt für den Bodenbearbeitungsteil (8, 9), und ein im wesentlichen viereckiger Blechausschnitt von geringerer Materialstärke für den Schaftteil (3) verwendet wird.

FIG. 1a

8

3

6

5  7

FIG. 1b.

3

8

3

8

FIG. 1c.

3

7

8

4

FIG. 1d

3

8

6

5

4

FIG. 1e

1

FIG. 2 a.

FIG. 2 b.

FIG. 2 c.

FIG. 2 d.

FIG. 2 e